# EUROPÄISCHE PATENTSCHRIFT

(11) **EP 1 240 818 B1**
(45) Veröffentlichungstag und Bekanntmachung des Hinweises auf die Patenterteilung: **02.11.2006**
(21) Anmeldenummer: 02000540.1
(22) Anmeldetag: 09.01.2002
(51) Int. Cl.: A01F 25/20

(54) **Silage-Schneidzange**
Cutting clamp for silage
Pince coupante pour ensilage

(30) Priorität: 14.03.2001 DE 20104426 U
(43) Veröffentlichungstag der Anmeldung: 18.09.2002
(73) Patentinhaber: Trioliet Mullos B.V., 7570 Odenzaal (NL)
(72) Erfinder: Van der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- EP-A- 0 506 158
- EP-A- 0 562 542
- DE-U- 29 916 030
- FR-A- 2 773 433
- GB-A- 2 087 206

## Beschreibung

Die Erfindung betrifft eine Silage-Schneidzange der im Oberbegriff des Anspruchs 1 angegebenen Art.

Unter anderem wegen der derzeitigen Probleme bei der Rinderhaltung zeichnet sich ein Trend zu extremen Großbetrieben oder zu kleinen Betrieben ab. Großbetriebe, z.B. in Frankreich, nutzen oftmals große Arbeitsfahrzeuge wie Radlader, die sich an ihren Auslegern mit den verschiedensten Werkzeugen bestücken lassen, so auch mit Silageschneidzangen. Kleinbetriebe tendieren zum Einsatz von Schneidzangen, weil große kombinierte Silage-Schneid- und Mischaggregate teuer und nicht auszulasten sind. Deshalb entwickelte sich ein deutlicher Bedarf nach leistungsfähigen Silageschneidzangen.

Bei der aus DE 299 20 834 U bekannten, an einem Traktor frontseitig oder heckseitig anbringbaren Schneidzange sind die Hydraulikzylinder hinter der Rahmenstruktur des Zangenunterteils an tiefliegenden Anlenkpunkten abgestützt. Die oberen Anlenkpunkte befinden sich an gegenüber dem Rahmen des Zangenoberteils abgekröpften, nach rückwärts greifenden Auslegern. Da die Hydraulikzylinder bei voll geöffneter Schneidzange eingefahren sind, ist ihre Zylinderlänge konstruktiv beschränkt von der der vertikale Entnahmebereich bei voll geöffneter Schneidzange abhängt. Da die Hebelarme zwischen den Hydraulikzylindern und der Schwenkachse in Relation zum Hebelarm der Schneide des Zangenoberteils sehr kurz sind, werden keine hohen Schneidkräfte und keine gleichförmigen Schneidbewegungen erreicht. Dieses Bauprinzip findet sich praktisch bei allen seit fast 30 Jahren auf dem bisher kleinen Markt befindlichen, nur in Details variierenden Schneidzangen, die wie zweiteilige Bagger-Schaufeln ausgelegt und angetrieben sind. Solche Schneidzangen sind jedoch nicht in der Lage, aus heutzutage in der Landwirtschaft üblichen, oftmals mehr als 2,2 m hohen Silageblöcken eine Tranche mit der vollen Höhe des Silageblocks sauber herauszuschneiden, sondern entnehmen nur eine relativ kleine Portion, d.h. nur einen Happen. Eine durchgehende Tranche wäre im Hinblick auf die Qualität und Form der Schnittflächen im Silageblock, die Qualität und Homogenität des aus der Tranche gebildeten, gemischten Futters, und das verlustarme und komfortable Wegarbeiten von Silageblöcken unterschiedlicher Höhen und/oder Formen, außerordentlich zweckmäßig, um die Akzeptanz von Schneidzangen im sich gegenwärtig spürbar positiv entwickelnden Markt zu verbessern.

Bei der gattungsgemäßen Schneidzange (EP 0 562 542 A) sind die Hydraulikzylinder innen im Ladebereich der Schneidzange angeordnet. Beim Schließen der gefüllten Schneidzange schwenken die Hydraulikzylinder in die Silageladung. Die Abstände der Anlenkpunkte der Hydraulikzylinder von der Schwenkachse sind extrem verschieden, was die Gefahr eines instabilen Schnitts und einer Verwindung besonders des Zangenoberteils erhöht.

In einem fahrbaren Futtermischer (DE 299 16 030 U) sind die die Silage-Schneidbewegung steuernden Hydraulikzylinder hinter der unteren Ladeschaufel positioniert, die die abgetrennte Silagetranche vorübergehend aufnimmt und in die Mischkammer bringt.

Weiterer Stand der Technik ist enthalten in DE 43 32 267 A, FR 27 54 671 A, EP 0 599 151 A, FR 277 3433 A, GB 2 087 206 A, EP 0 506 158 A.

Der Erfindung liegt die Aufgabe zugrunde, eine leistungsfähige, zur Kapazität moderner Arbeitsfahrzeuge passende Silage-Schneidzange anzugeben, die einen vertikalen Entnahmebereich mit der Höhe in der Praxis üblicher Silageblöcke und einen sauberen, kraftvollen Schnitt bei der Separation einer über die Silageblockhöhe durchgehenden Tranche ermöglicht.

Die gestellte Aufgabe wird mit den Merkmalen des Anspruchs 1 gelöst.

Dank der zwischen der Schwenkachse und der aktiven Schneide angeordneten Hydraulikzylinder, die sich beim Schnitt verkürzen, werden nicht nur ein außerordentlich hoher Entnahmebereich entsprechend den vorkommenden Silageblockhöhen erzielt, sondern auch ein kraftvoller und glatter Schnitt mit hoher Schneidkraft bei günstigen Hebelverhältnissen. Die bewusste Abkehr von den üblichen Konzepten der SilageSchneidzangen passt zu modernen, leistungsfähigen Arbeitsfahrzeugen und Anschlusseinrichtungen, mit denen der Vorteil des hohen Entnahmebereichs mit der günstigen Schnittflächenform- und -qualität im Silageblock und die Qualität des aus der Tranche gebildeten Futters vom Landwirt optimal nutzbar ist, der im Regelfall über wenigstens ein auch für andere Arbeiten einsetzbares Arbeitsfahrzeug moderner Bauart mit bei weitem ausreichender Leistungsfähigkeit verfügt. Ähnliche Antriebskonzepte gibt es zwar bei großen bodengebundenen, kombinierten Silage-Misch- und Schneidaggregaten, für die jedoch andere, nicht mit den Anforderungen an Schneidzangen vergleichbare Voraussetzungen gelten. Langbauende Hydraulikzylinder, die ausgefahren den gewünschten hohen Entnahmebereich ermöglichen, lassen sich unter nutzen der größten lichten Innenweite der geschlossenen Schneidzange bequem zwischen die Abwinklungen einbauen. Es ergeben sich günstige wirksame Hebel, wenn die Rahmenstruktur über die Seitenwände des Zangenunterteils nach oben greifende Verlängerungen besitzt, in denen die Schwenkachse angeordnet ist. Die außen an der Schneidzange angeordneten Hydraulikzylinder kommen mit dem Silageblock nicht in Kontakt, weil ohnedies nur eine Tranche mit begrenzter Schnitttiefe herausgeschnitten wird.

Zweckmäßig ist der Abstand von der Schwenkachse zum Anlenkpunkt im Zangenunterteil größer als der Abstand von der Schwenkachse zum Anlenkpunkt am Zangenoberteil. Dies führt zu dem hohen Entnahmebereich und zu hohen Schnittkräften, die einen sauberen und ruckfreien Schnitt ergeben.

Da in der Praxis häufig mindestens 2,2 m hohe Silageblöcke existieren, oder die Silageblöcke sogar noch höher sind, sollten die Abstände oder Hebelarme, die für die Auslegung der Schneidzange und ihrer Antriebskomponenten gewählt sind, so aufeinander abgestimmt werden, dass sich ein vertikal gesehener Schneid- oder Entnahmebereich von mindestens 2,2 m, besser noch bis zu 3 m, vorzugsweise sogar bis zu 4,5 m, erzielen lässt, obwohl die geschlossene Schneidzange nur eine bequem zu handhabende Größe und ein Gewicht hat, die sich mit Radladern, modernen Traktoren oder Vorderladern leicht handhaben lassen.

Um hohe Schneidkräfte problemlos in die Schneid-Zangenteile einleiten zu können, empfiehlt es sich, Versteifungsteile anzubringen, die schützende, taschenartige Aufnahmen für die Anlenkpunkte bilden. Die Versteifungsteile dienen ferner zur Aussteifung der Schneid-Zangenteile und der lastempfindlichen Abwinklungen. Die Versteifungsteile ermöglichen es ferner, die Anlenkpunkte so tief bzw. hoch wie möglich zu positionieren, um Hydraulikzylinder möglichst großer Baulänge unterbringen zu können.

Da die separierte Tranche mit der geschlossenen Schneidzange zur Abgabe transportiert wird, ist es zweckmäßig, die Rahmenstruktur zumindest des Zangenunterteils als geschlossene Rückwand auszubilden, die ein Herausfallen der Silage verhindert und zur Stabilität beiträgt.

Da wegen des hohen Entnahmebereichs und großer Schnittkräfte Verwindungen der Schneidzangenteile und dadurch hervorgerufene Schäden oder Betriebsstörungen nicht auszuschließen sind, ist nicht nur eine z.B. hydraulische Gleichlaufsteuerung der Hydraulikzylinder vorgesehen, sondern zusätzlich eine z.B. elektromechanische Abtastvorrichtung für Relativverwindungen, um die Gleichlaufsteuerung zu unterstützen. Hydraulische Gleichlaufsteuerungen, beispielsweise mit in Serie geschalteten Hydraulikzylindern unterschiedlicher Querschnittsflächen, bei denen der größere mit seinem kolbenstangenseitigen Druck den kleineren am kolbenseitigen Ende beaufschlagt, oder Parallelsteuerungen gleichgroßer Hydraulikzylinder über einen Stromteiler oder eine Mengenregelvorrichtung, zeigen nämlich in der Praxis Toleranzen von mehreren Prozent, und können deshalb bis zur Blockage führende Verwindungen nicht zuverlässig genug ausschließen. Auch mechanische Gleichlaufsteuerungen sind nicht zuverlässig genug. Die zusätzliche, z.B. elektromechanische Abtastvorrichtung, die die Gleichlaufsteuerung übersteuert, falls die Verwindung zu stark werden sollte, kann Schäden vermeiden und sogar gezielt eingreifen, um auftretende Verwindungen wieder zu beseitigen.

Baulich einfach wird die Abtastvorrichtung mittels zweier an den beiden Seiten der Schneidzange angeordneter Lenkermechanismen gebildet, die eine mechanische gegenseitige Koppelung haben, über die ein Signalgeber betätigt wird, wenn eine nicht mehr zulässige Abweichung zwischen den Schwenkwinkeln, z.B. des Schneid-Zangenoberteils, an beiden Seiten der Schneidzange festgestellt wird.

Zweckmäßig generiert der Signalgeber ein Alarmsignal und/oder ein Abschaltsignal und/oder ein Korrektursignal für die Gleichlaufsteuerung. Das Alarmsignal kann zum Anlass genommen werden, die Betätigungskräfte zurückzunehmen, und die Situation zu überprüfen. Das Abschaltsignal unterbricht sicherheitshalber den Schneidvorgang. Das Korrektursignal lässt sich nutzen, um bewusst hydraulisch einzugreifen, bis die beiden Hydraulikzylinder wieder im Gleichlauf und mit gleichen Längen arbeiten.

Der Lenkermechanismus der Abtastvorrichtung benutzt zweckmäßig zwei erste Lenker, die die Schwenkachse überbrücken, zwei Tastlenker, von denen nur einer die Koppelwelle dreht, und einen Referenzhebel, der die Winkelversetzung zwischen den beiden Tastlenkern abgreift und eine signalerzeugende Schalteinrichtung betätigt, wenn eine unzulässige Verwindung festgestellt wird.

Ein feinfühliges, gleitendes Eingreifen der Abtastvorrichtung ist möglich, wenn der Referenzhebel eine biegsame Schalterbetätigungszunge ist.

Die Schalteinrichtung enthält zweckmäßigerweise zwei wechselseitig betätigbare Grenzschalter, z.B. elektrische Mikroschalter, die mit ihren Signalen der Gleichlaufsteuerung mitteilen, welcher der beiden Zylinder vorläuft bzw. nachläuft. Die Gleichlaufsteuerung kann dann korrigierend eingreifen.

Um einen sauberen Schnitt zu erzeugen, störende Reibbelastungen zu vermeiden und die herausgelöste Tranche zügig ins Innere der Schneidzange zu verlagern, ist es zweckmäßig, die Trennfläche mit einer Bogenkrümmung auszubilden. Als Messer an der Querkante der Trennfläche kann ein feststehendes Messer oder können zur hin- und hergehenden Bewegung antreibbare Messer benutzt werden.

Auch an freien Kantenbereichen der Seitenwände in den Schneizangenteilen, zweckmäßigerweise nur jeweils im Anschlussbereich an die Querkanten, sollten Messer, entweder stationäre Messer oder Klingen oder bewegliche Messer angeordnet sein, um auch die Seitenränder der Tranche sauber zu formen und/oder bei in eine Plastikfolie eingehüllter Silage die Plastikfolie sauber zu durchtrennen.

Damit sich die Schneidzange nahe beim Schwerpunkt des Arbeitsfahrzeugs platzieren lässt, sollten die Fahrzeuganschlusseinrichtungen tragende Wangen an der Rahmenstruktur mit einem Querabstand platziert sein, der größer ist als die Fahrzeugbreite oder die Kabinenbreite. Das Fahrzeug kann sozusagen zwischen die Wangen nahe an die Rahmenstruktur gestellt werden, um günstige Hebelverhältnisse beim Anheben und Fahren mit der vollen Schneidzange zu erzielen.

Anhand der Zeichnung werden Ausführungsformen des Erfindungsgegenstandes erläutert. Es zeigen:
- Fig. 1: eine schematische Seitenansicht einer Silage-Schneidzange an einem Radlader, in einer Schneidbereitschaftsstellung;
- Fig. 2: die Schneidzange in einer Transportstellung,
- Fig. 3: die Silage-Schneidzange angebaut an die Front eines Schleppers in Schneidbereitschaftsstellung,
- Fig. 4: einen Querschnitt durch einen Silageblock, der laibförmig und in einer Kunststoffhülle aufbewahrt ist,
- Fig. 5: die Silage-Schneidzange angebaut an das Heck eines Schleppers,
- Fig. 6: eine Seitenansicht der Silage-Schneidzange mit integrierter elektromechanischer Abtastvorrichtung,
- Fig. 7: eine Vorderansicht der Schneidzange,
- Fig. 8: eine Seitenansicht, teilweise im Schnitt eines Details der Abtastvorrichtung der Fig. 6 und 7, und
- Fig. 9: eine Hinteransicht dieses Details.

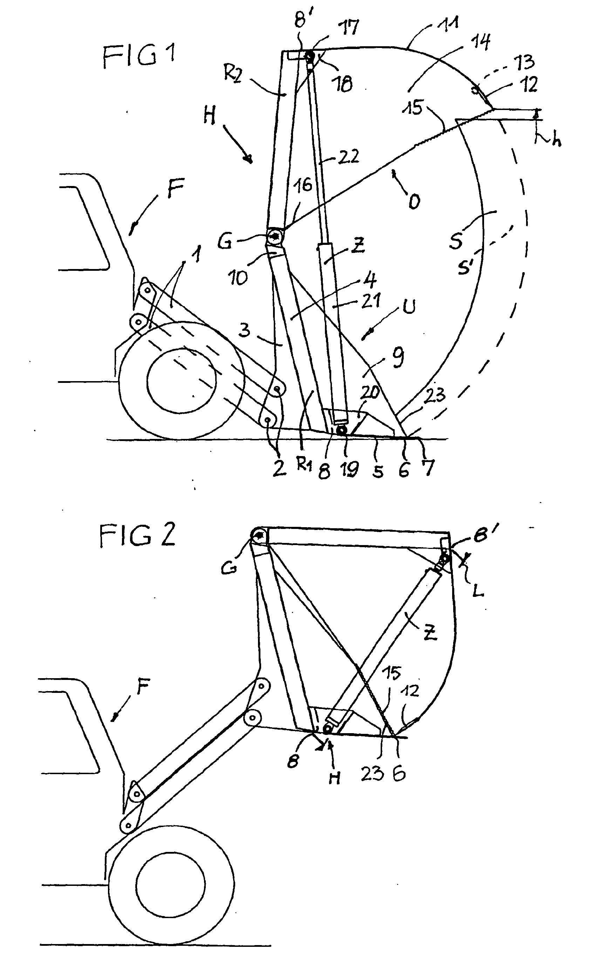

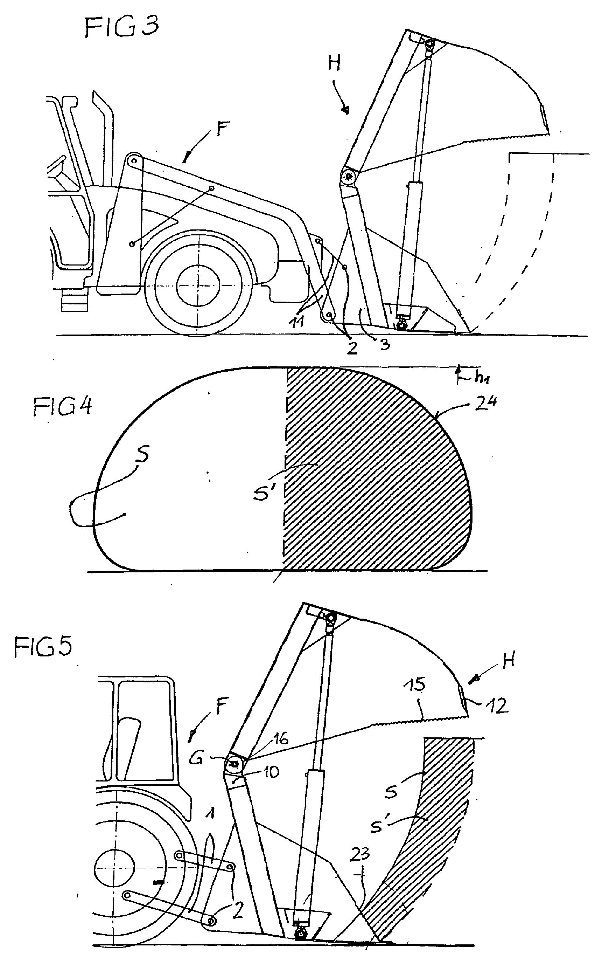

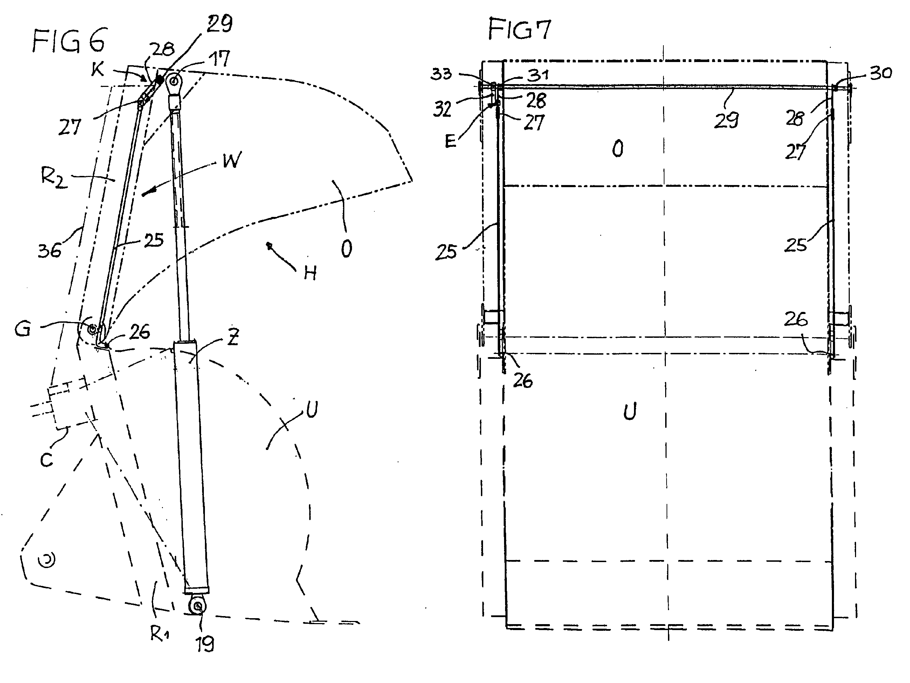

In den Fig. 1 und 2 ist eine Silage-Schneidzange H an einem als Arbeitsfahrzeug F dienenden Radlader, z.B. frontseitig, angebaut. Eine Parallelogrammführung 1 ist an Anschlusseinrichtungen 2 von hochkant stehenden Wangen 3 eines Schneidzangenunterteils U abnehmbar angeschlossen. Der Schneidzangenunterteil U ist schaufelförmig und weist eine rückseitige, annähernd vertikale Rahmenstruktur R1 auf, die als geschlossene Rückwand 4 ausgebildet sein kann. Über eine Abwinklung 8 schließt sich an die Rahmenstruktur R1 unten eine Ladefläche 5 an, die einen Schneidenwiderlagerbereich 6 und endseitige Zinken 7 hat. In der Abwinklung 8 liegt der Winkel zwischen der Ladefläche 5 und der Rahmenstruktur R1 z.B. nahe bei 90°, ist aber größer als 90°, so dass bei auf den Boden abgesetzter Ladefläche 5 die Rahmenstruktur R1 nach oben schräg in Richtung zum Arbeitsfahrzeug F geneigt ist. In die Rahmenstruktur R1 sind Seitenwände 9 eingegliedert, die zumindest im Anschluss zum Schneidwiderlagerbereich 6 an den freien Kanten schneidenartig ausgebildet sind oder Schneiden 23 tragen (gegebenenfalls sogar bewegbare, angetriebene Schneidelemente).

Die Rahmenstruktur R1 weist oberhalb der Seitenwände 9 Verlängerungen 10 nach oben auf, in denen eine im Wesentlichen horizontale Schwenkachse G für einen Schneidzangenoberteil O angeordnet ist. Der Schneidzangenoberteil O besitzt einen rückseitigen Rahmen R2, der gegebenenfalls als geschlossene Rückwand ausgebildet ist, und von dem über eine Abwinklung 8' eine Trennfläche 11 nach vorne verläuft. In der Abwinklung liegt der Winkel zwischen der Trennfläche 11 und dem Rahmen R2 z.B. bei 90°, ist aber größer als 90°. Die Trennfläche 11 endet mit quer verlaufender Schneide 12, die stationär sein kann, oder aus beweglichen oder durch einen Antrieb 13 hin- und hergehend antreibbare Schneidelementen besteht. Zumindest im Anschluss an die Schneide 12 sind die freien Kantenbereiche von Seitenwänden 14 des Oberteils O als Schneiden 15 ausgebildet oder mit Schneiden versehen, und hat die Trennfläche 11 eine Bogenkrümmung mit zumindest in etwa in der Schwenkachse G liegendem Krümmungszentrum. Auch hier könnten bewegliche Schneidelemente vorgesehen werden. Der Rahmen R2 ist mit über die Seitenwände 14 nach unten greifenden Verlängerungen 16 an der Gelenkachse G abgestützt. Die Verlängerungen 16, 10 können relativ zu den Seitenwänden 9, 14 nach außen gesetzt sein, so dass dann zwei Schwenkstellen (ohne durchgehende Achse, nur mit kurzen Achsabschnitten) gebildet sind, deren Querabstand größer ist als der Querabstand der Seitenwände.

In den Abwinklungen 8, 8' sind Versteifungsteile 18, 20 vorgesehen, die die Rahmenstruktur R1 bzw. den Rahmen R2 mit der Ladefläche 5 bzw. der Trennfläche 11 verbinden und taschenförmige Aufnahmen für Anlenkpunkte 17, 19 zweier Hydraulikzylinder Z bilden. Die Hydraulikzylinder Z sind außerhalb der Seitenwände 14, 9 platziert.

Jeder Hydraulikzylinder Z besteht aus einem Zylinderrohr 21, einem nicht gezeigten Kolben und einer ausfahrbaren Kolbenstange 22. Die Anlenkpunkte 17, 19 sind in Hochrichtung so weit voneinander beabstandet, wie möglich, um Hydraulikzylinder Z unterzubringen, die eingefahren große Baulänge haben. Die Abwinklungen 8, 8' definieren bei geschlossener Silage-Schneidzange H (Fig. 2) in Schwenkrichtung um die Schwenkachse G die größte innere lichte Weite L. Die Hydraulikzylinder Z bilden dann mit dem Rahmen R2 und der Rahmenstruktur R1 in etwa ein gleichschenkeliges Dreieck, dessen Basisseite (die Zylinder Z) länger ist als die beiden anderen Seiten. Die sich zwischen der Schwenkachse G und der Schneide 12 befindenden Hydraulikzylinder Z ermöglichen einen Ausfahrhub der Kolbenstange 12 annähernd entsprechend der größten inneren lichten Weite L. Der Ausfahrhub wird für die Schneide 12 dadurch ins Größere übersetzt, dass der Abstand von der Gelenkachse G zum Anlenkpunkt 17 kleiner ist als der Abstand von der Schwenkachse G zum Anlenkpunkt 19, und der Abstand von der Schwenkachse G zur Schneide 12 größer ist als der Abstand von der Schwenkachse G zum Anlenkpunkt 17. Durch vollständiges Ausfahren der Hydraulikzylinder Z lässt sich der in Fig. 1 gezeigte, maximale Entnahmebereich h mit einer Höhe h über dem Boden einstellen, die mindestens 2,2 m betragen sollte, vorzugsweise bis zu 3 m oder sogar bis zu mehr als 4 m, entsprechend den in der Landwirtschaft vorkommenden Höhen eines Silageblocks.

Aus der in Fig. 1 gezeigten Schneidbereitschaftsstellung wird aus einem Silageblock eine Tranche S' in einem Zug herausgeschnitten, und von der Trennfläche 11 ins Innere der Schneidzange H verlagert. Die Schneiden 15 bearbeiten die Seitenflächen der Tranche S'. Die Schneiden 23 arbeiten gegen Schnittende mit den Schneiden 15 zusammen, um die Tranche sauber zu begrenzen. Ferner durchtrennen die Schneiden 23 eine Kunststoffabdeckung des Silageblocks S.

Zunächst wird die geöffnete Schneidzange H mit den Zinken 7 entlang des Bodens unter den Silageblock S geschoben. Die Einschiebetiefe richtet sich nach dem Bewegungswiderstand und der gewünschten Dicke bzw. Schnitttiefe der herauszuschneidenden Tranche S'. Die Schneide 12 greift oben über den Silageblock S. Dann werden beide Hydraulikzylinder Z synchron eingefahren, wobei die Schneide 12 im Zusammenspiel mit den Schneiden 15 die gestrichelt angedeutete Tranche S' abtrennt. Der Schneidvorgang ist beendet, sobald die Schneide 12 auf den Schneidwiderlagerbereich 6 trifft. Dann sind die Seitenwände 14, 9 so einander angenähert, dass seitlich keine Silage herausfällt. Das Arbeitsfahrzeug F fährt zurück und hebt die gefüllte Schneidzange H an. Die Wangen 3 sind zweckmäßigerweise weiter beabstandet als es der Fahrzeugbreite, z.B. beim Kabinenaufbau, entspricht, so dass die Schneidzange H bis über die Vorderachse des Arbeitsfahrzeugs gebracht werden kann. Dann fährt das Arbeitsfahrzeug F zu einem Mischer und befüllt diesen beispielsweise von oben, oder das Futter wird abgeworfen und von Hand gemischt.

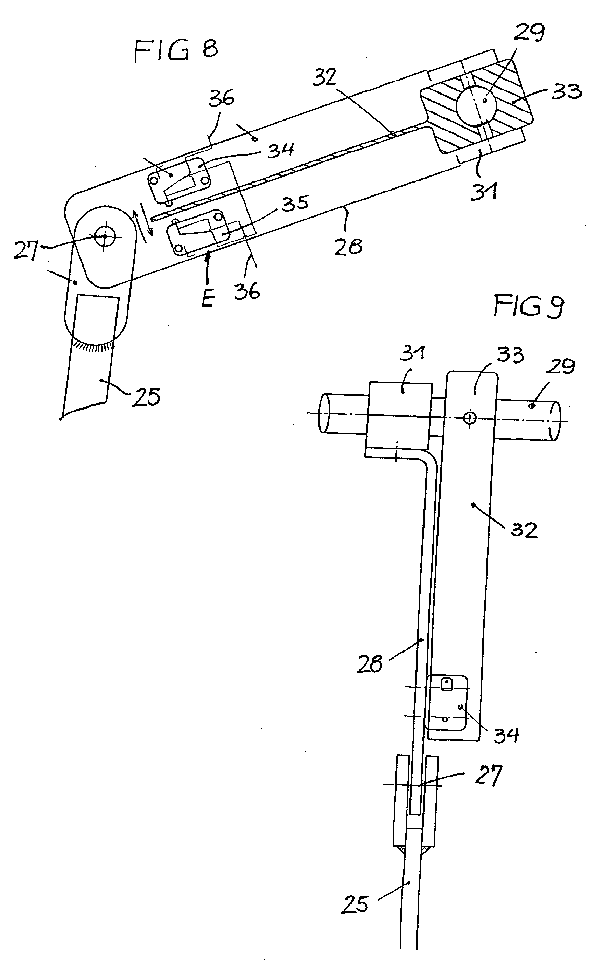

In Fig. 3 ist die Silage-Schneidzange H an einen Schlepper als Arbeitsfahrzeug F angebaut. Durch den großen Abstand zwischen den Wangen 3 lässt sich die Schneidzange H bis nahe an die Kabine bringen.

In Fig. 5 ist die Silage-Schneidzange an das Heck eines Schleppers angebaut, z.B. an die Dreipunkthebevorrichtung. Es ist denkbar an den Verlängerungen 10, 16 die beiden Schwenkstellen (Schwenkachse G) so weit außen zu positionieren, dass sich die Schwenkachse G bis nahe an die Hinterräder des Schleppers bringen lässt, und die Kabine zwischen die Schwenkstellen greift, wenn die gefüllte Schneidzange H abtransportiert wird.

In den Fig. 3 und 5 wird von einem Silageblock S abgetragen, der laibförmig und in einer Kunststoffhülle 24 enthalten ist. Die gestrichelte Tranche S' wird mit einem Schneidvorgang abgenommen. Die Höhe h solcher Silageblöcke S liegt in der Praxis bei etwa 2,2 m oder mehr, während die Breite ca. 3,6 m betragen kann. Von den Schneiden 12, 15 und 23 wird die Kunststoffhülle 24 sauber durchtrennt.

In den Fig. 6 und 7 ist die Silage-Schneidzange H zusätzlich mit einer, z.B. elektromechanischen, Abtastvorrichtung W für Verwindungen, beispielsweise des Zangenoberteils O, während des Schneidvorgangs ausgestattet. Die beiden Hydraulikzylinder Z sind mit einer Gleichlaufsteuerung C verbunden, zweckmäßigerweise einer hydraulischen Gleichlaufsteuerung, die eine Verwindung des Zangenoberteils O vermeiden soll, indem beide Zylinder Z jeweils mit gleichen Wirklängen bzw. synchron arbeiten. Da in der Praxis Gleichlaufsteuerungen mit einem Toleranzbereich arbeiten, der Verwindungen nicht zuverlässig genug ausschließt, ist die Abtastvorrichtung W vorgesehen. Die Abtastvorrichtung W kann bei Auftreten einer unzulässigen Verwindung entweder die Beaufschlagung der Hydraulikzylinder unterbrechen, oder zumindest ein Alarmsignal generieren, oder selbst korrigierend eingreifen, oder eine Korrigiervorrichtung der Gleichlaufsteuerung betätigen.

In der Abtastvorrichtung W sind an beiden Seiten der Schneidzange H Lenkermechanismen vorgesehen, die über eine Koppelwelle 29 mechanisch gekoppelt sind. Jeweils ein erster Lenker 25 überbrückt die Schwenkachse G und verläuft an der Au-ßenseite oder im Rahmen R2 bis zu einer Anlenkachse 26 an der Rahmenstruktur R1 oder dem Zangenunterteil U. Das freie Ende des Lenkers 25 ist bei 27 gelenkig mit einem Tastlenker 28 gekoppelt, der in der gezeigten, vollen Öffnungsstellung zweckmäßigerweise mit dem Lenker 25 einen stumpfen Winkel, hingegen in der voll geschlossenen Stellung der Schneidzange, einen Winkel von etwa 90° einschließt. Das freie Ende des Tastlenkers 28 (einer an jeder Seite der Schneidzange H) ist auf der den Zangenoberteil O quer durchsetzenden Koppelwelle 29 gelagert. In Fig. 7 ist der rechte Tastlenker 28 bei 30 undrehbar mit der frei drehbar gelagerten Koppelwelle 29 verbunden. Der in Fig. 7 linke Tastlenker 28 ist bei 31 drehbar auf der Koppelwelle 29 gelagert. Benachbart zum drehbaren Tastlenker 28 ist ein Referenzhebel 32 in einer Fixierung 33 undrehbar mit der Koppelwelle 29 verbunden. Zwischen dem Referenzhebel 32 und dem Tastlenker 28 ist eine Schalteinrichtung E vorgesehen, die bei Auftreten einer unzulässigen Winkelversetzung zwischen den beiden Tastlenkern 28 betätigt wird und das erwähnte Alarmsignal, Abschaltsignal oder Korrektursignal erzeugt, und beispielsweise über Leitungen 36 an die Gleichlaufsteuerung C übermittelt. Die Koppelwelle 29 bildet in der Abtastvorrichtung W eine mechanische Kopplung zwischen den Lenkermechanismen an den beiden Seiten der Schneidzange H.

Die Abtastvorrichtung W könnte analog im Zangenunterteil U untergebracht sein, oder sich zwischen den Anlenkpunkten 17, 19 erstrecken. Da jedoch Verwindungen des Zangenoberteils O, oder Fehlstellungen des Zangenoberteils O relativ zum Zangenunterteil U kritischer sind, ist es zweckmäßig, die in den Fig. 6 und 7 gezeigte Anordnung zu wählen, bei der durch eine Übersetzung zwischen den langen Lenkern 25 und den kurzen Tastlenkern 28 bereits kleine Winkelversetzungen zwischen den Tastlenkern 28 präzise abgebildet werden. Erzeugt die Abtastvorrichtung W Korrektursignale für die Gleichlaufsteuerung C, dann werden die Korrektursignale zum Anlass genommen oder direkt verwertet, um bei Ansprechen der Schalteinrichtung E den jeweils voreilenden Hydraulikzylinder Z zu verlangsamen und den anderen Hydraulikzylinder nachzuführen oder dgl., abhängig davon, in welcher Richtung die Winkelversetzung zwischen den Tastlenkern 28 aufgetreten ist, und bis die Winkelversetzung beseitigt ist.

Dies wird im Detail anhand der Fig. 8 und 9 erläutert. Beginnt sich der Zangenoberteil O zu verwinden, weil die Einfahrlänge des einen von der Einfahrlänge des anderen Hydraulikzylinders abweicht, dann verstellt die Koppelwelle 29 den mit dem in Fig. 7, rechts gezeigten Tastlenker 28 mechanisch gekoppelten Referenzhebel 32 (zweckmäßigerweise eine flexible Schalterbetätigungszunge) relativ zum auf der Koppelwelle 29 verdrehbaren, in Fig. 7 linksseitigen, Tastlenker 28, bis ein elektrischer Schalter 34 oder 35 der Schalteinrichtung E betätigt wird. Zum Korrigieren der Verwindung wird dieses Signal in der Gleichlaufsteuerung C so berücksichtigt, dass der jeweils nachlaufende Hydraulikzylinder Z nachgeführt wird (und/oder der vorlaufende verzögert wird), bis der Referenzhebel 32 den Schalter 34 oder 35 wieder freigibt. Beide Hydraulikzylinder Z werden danach wieder synchron beaufschlagt.

Da Verwindungen des Zangenoberteils O eigentlich nur beim Schnitt abzutasten und zu korrigieren sind, könnten anstelle der Lenkermechanismen auch einfach zu platzierende Seilzüge benutzt werden. Eine anderen Möglichkeit bestünde darin, beide Tastlenker 28 undrehbar mit der Koppelwelle 29 zu verbinden und einen Tastlenker mit Dehnungsmessstreifen zu bestücken, die bei einer Winkelabweichung zwischen den beiden Tastlenkern 28 aus der auftretenden Biegelast analoge Signale für die Gleichlaufsteuerung C oder einen Abschalter oder einen Alarmgeber generieren. Die Abtastvorrichtung W kann innen im Rahmen R2 angeordnet sein. Enthält die hydraulische Gleichlaufsteuerung beispielsweise einen Stromteiler, dann kann das Korrektursignal einen Schalt- oder Proportional-Magneten betätigen, der den Stromteiler verstellt. Ähnlich könnten bei einer hydraulischen Steuerschaltung mit Druckbegrenzungs- und/oder Differenzdruck-Steuerventilen die Ventile vorübergehend verstellt werden. Es ist sogar möglich, die abgetastete Winkelversetzung zur Korrektur-Verstellung direkt mechanisch an die entsprechenden Komponenten der Hydrauliksteuerung zu übertragen. Das System arbeitet zweckmäßig vollautomatisch, so dass sich der Fahrzeugführer nicht um auftretende Verwindungen zu kümmern braucht.

## Patentansprüche

1. Silage-Schneidzange (H) zum Heck- oder Frontanbau an ein selbstfahrendes Arbeitsfahrzeug (F), mit einem eine rückseitige Rahmenstruktur (R1) und eine über eine erste Abwinklung (8) mit der Rahmenstruktur verbundene Ladefläche (5) aufweisenden Zangenunterteil (U), an dem ein einen rückseitigen Rahmen (R2) und eine über eine zweite Abwinklung (8') mit dem Rahmen verbundene, schneidenbewehrte Trennfläche (11) aufweisender Zangenoberteil (O) um eine in etwa horizontale Schwenkachse (G) schwenkbar angebracht ist, mit Fahrzeug-Anschlusseinrichtungen (2) an der der Ladefläche (5) abgewandten Seite der Rahmenstruktur (R1) des Zangenunterteils (U) und mit an der der Ladefläche (5) und der Trennfläche (11) zugewandten Seite der Schwenkachse (G) angeordneten Hydraulikzylindern (Z) zwischen dem Zangenober- und dem Zangenunterteil (O, U), **dadurch gekennzeichnet, dass** die ersten und zweiten Abwinklungen (8, 8') bei geschlossener Schneidzange (H) in Schwenkrichtung um die Schwenkachse (G) die größte lichte Innenweite (L) der Schneidzange definieren, dass die Hydraulikzylinder (Z) an den Außenseiten der Schneidzangenteile (O, U) angeordnet sind, dass die Anlenkpunkte (17, 19) der Hydraulikzylinder (Z) zumindest weitgehend in den Abwinkelungen (8, 8') angeordnet und die eingefahrenen Hydraulikzylinder (Z) mit einer zumindest in etwa der lichten größten Innenweite (L) entsprechenden Baulänge ausgebildet sind, und dass die Rahmenstruktur (R1) über Seitenwände (9) des Zangenunterteils (U) nach oben greifende Verlängerungen (10) aufweist, in denen die Schwenkachse (G) angeordnet ist.

2. Silage-Schneidzange nach Anspruch 1, **dadurch gekennzeichnet, dass** der Abstand von der Schwenkachse (G) zum Anlenkpunkt (19) des Hydraulikzylinders (Z) am Zangenunterteil (U) größer ist als der Abstand von der Schwenkachse (G) zum Anlenkpunkt (17) am Zangenoberteil (O).

3. Silage-Schneidzange nach Anspruch 1, **dadurch gekennzeichnet, dass** bei geschlossener Schneidzange (H) der durch den Abstand zwischen den Anlenkpunkten (17, 19) begrenzte Zylinderhub, der Abstand der Schneide (12) des Zangenoberteils (O) von der Schwenkachse (G), und die Abstände der Anlenkpunkte (17, 19) von der Schwenkachse (G) so aufeinander abgestimmt sind, dass bei voll geöffneter Silage-Schneidzange (H) der in Vertikalrichtung gesehene Schneidbereich (h) mindestens 2,2 m, vorzugsweise bis zu 3,0 m, vorzugsweise sogar bis zu 4,5 m, misst.

4. Silage-Schneidzange nach Anspruch 1, **dadurch gekennzeichnet, dass** die Anlenkpunkte (17, 19) in Versteifungsstrukturen (18, 20) angeordnet sind, und dass die Versteifungsstrukturen taschenartige Aufnahmen für die Anlenkpunkte bilden.

5. Silage-Schneidzange nach Anspruch 1, **dadurch gekennzeichnet, dass** die Rahmenstruktur (R1) des Schneidzangenunterteils (U) eine geschlossene Rückwand ist.

6. Silage-Schneidzange nach Anspruch 1, **dadurch gekennzeichnet, dass** für die Hydraulikzylinder (Z) eine hydraulische Gleichlaufsteuerung vorgesehen ist, und dass an den Schneidzangenteilen (U, O) eine die Gleichlaufsteuerung (C) vorzugsweise übersteuernde, z.B. elektromechanische, Abtastvorrichtung (W) für Schneidzangenteil-Verwindungen angeordnet ist.

7. Silage-Schneidzange nach Anspruch 6, **dadurch gekennzeichnet, dass** die Abtastvorrichtung (W) zwei an den Seiten der Schneidzangenteile (U, O) angeordnete Lenkermechanismen (25, 28) aufweist, die über eine mechanische Koppelung (K) verbunden sind, dass jeder Lenkermechanismus den tatsächlichen relativen Schneidzangenteil-Schwenkwinkel an einer Seite abtastet, und dass der mechanischen Koppelung (K) ein Signalgeber (34, 35) zugeordnet ist, der ab Überschreiten einer zulässigen Abweichung zwischen den Schwenkwinkeln an beiden Seiten betätigbar ist, und ein Alarmsignal und/oder ein Abschaltsignal und/oder ein Korrektursignal für die Gleichlaufsteuerung (C) erzeugt.

8. Silage-Schneidzange nach Anspruch 7, **dadurch gekennzeichnet, dass** jeder Lenkermechanismus einen ersten am Schneidzangenunterteil (U) angelenkten und vom Zangenoberteil (O) über die Schwenkachse (G) hinweggreifenden Lenker (25) aufweist, der schwenkbar mit einem Tastlenker (28) verbunden ist, dass jeder Tastlenker (28) an eine parallel zur Gelenkachse (G) am Schneidzangenoberteil (O) drehgelagerte Koppelwelle (29) angeschlossen ist, dass der Tastlenker (28) des einen Lenkermechanismus undrehbar und der Tastlenker des anderen Lenkermechanismus drehbar auf der Koppelwelle (29) sitzt, dass neben dem Tastlenker (28) des anderen Lenkermechanismus ein Referenzhebel (32) undrehbar auf der Koppelwelle (29) angebracht ist, und dass am Tastlenker (28) oder am Referenzhebel (32) als Signalgeber (34, 35) eine auf eine relative Winkelversetzung zwischen dem Referenzhebel (32) und dem Tastlenker (28) ansprechende, signalerzeugende Schalteinrichtung (E) vorgesehen ist.

9. Silage-Schneidzange nach Anspruch 8, **dadurch gekennzeichnet, dass** der Referenzhebel (32) eine biegsame Schalterbetätigungszunge ist.

10. Silage-Schneidzange nach Anspruch 8, **dadurch gekennzeichnet, dass** die Schalteinrichtung (E) zwei wechselseitig betätigbare Grenzschalter (34, 35) aufweist und mit der hydraulischen Gleichlaufsteuerung (C) der Hydraulikzylinder (Z) verbunden ist.

11. Silage-Schneidzange nach Anspruch 1, **dadurch gekennzeichnet, dass** die Trennfläche (11) des Zangenoberteils (O) im Anschluss an antreibbare oder fest installierte Schneiden (12) eine Bogenkrümmung mit zumindest in etwa in der Gelenkachse (G) liegendem Krümmungszentrum aufweist.

12. Silage-Schneidzange nach Anspruch 1, **dadurch gekennzeichnet, dass** an freien Randbereichen der Seitenwände (14, 9) der Schneidzangenteile (O, U) fixierte oder zur Bewegung antreibbare Schneidelemente (15, 23) vorgesehen sind.

13. Silage-Schneidzange nach Anspruch 1, **dadurch gekennzeichnet, dass** die Fahrzeug-Anschlusseinrichtungen (2) an rückseitigen Wangen (3) der Rahmenstruktur (R1) vorgesehen sind, und dass der horizontale Abstand zwischen den Wangen (3) größer ist als die Breite des Arbeitsfahrzeugs (F) oder dessen Kabine.

## Claims

1. Silage cutting gripper (H) for being mounted to the rear or the front of a self-propelled mobile working vehicle (F), comprising a lower part (U) including a rear side frame structure (R1) and a loading plane (5) connected to said frame structure (R1) via a first angled section (8), an upper part (O) including a rear side frame (R2) and a separation plane (11) equipped with cutting edges and connected to said frame (R2) via a second angled section (8'), said upper part (O) being pivotably provided at a substantially horizontal pivot axis (G) at said lower part (U), vehicle connection assemblies (2) provided at the side of the frame structure (R1) of said lower part (U) opposite to the loading plane (5), and hydraulic cylinders (Z) interposed between said upper and lower parts (O, U) between said pivot axis (G) and said loading plane (5) and said separation plane (11), **characterised in that** said first and second angled sections (8, 8') define the largest interior width (L) of the cutting gripper in pivoting direction about said pivot axis (G) in closed condition of said cutting gripper (H), that said hydraulic cylinders (Z) are provided at the outer sides of said upper and lower parts (O, U), that linkage points (17, 19) of said hydraulic cylinders (Z) at least dominantly are provided in said angled sections with said hydraulic cylinders (Z) in their fully retracted condition having a structural length corresponding substantially to said largest interior width (L), and that said frame structure (R 1) has prolongations (10) extending upwardly beyond side walls (9) of said lower part (U) with said pivot axis (G) being situated in said prolongations (10).

2. Silage cutting gripper as in claim 1, **characterised in that** the distance between said pivot axis (G) and said linkage point (19) of said hydraulic cylinder (Z) at said lower part (U) of said cutting gripper is larger than distance between the pivot axis (G) and said linkage point (17) at said upper part (O) of said cutting gripper.

3. Silage cutting gripper as in claim 1, **characterised in that** in closed condition of said cutting gripper (H) the cylinder stroke limited by the distance between said linkage points (17, 19), the distance between the cutting edge (12) of the upper part (O) and the pivot axis (G), and the respective distances between said upper and lower linkage points (17, 19) and said pivot axis (G) are matched to each other such that in fully opened condition of said silage cutting gripper (H) the silage taking range (h) amounts in vertical direction to at least 2.2 m, preferably to about 3.0 m, most preferably even to about 4.5 m.

4. Silage cutting gripper as in claim 1, **characterised in that** said linkage points (17, 19) are located in stiffening parts (18, 20) which stiffening parts form pocket-like sockets for said linkage points.

5. Silage cutting gripper as in claim 1, **characterised in that** said frame structure (R1) of said lower part (U) of said cutting gripper (H) is formed as a closed rear wall.

6. Silage cutting gripper as in claim 1, **characterised in that** a hydraulic synchronisation control (C) is associated to said hydraulic cylinders (Z), and that an, e.g. electromechanical, sensing device (W) for distortions of at least one cutting gripper part is provided at said cutting gripper parts (U, O) for overruling said synchronisation control (C).

7. Silage cutting gripper as in claim 6, **characterised in that** said sensing device (W) comprises two linkage mechanisms (25, 28) situated at both sides of said cutting gripper parts (U, O), that said linkage mechanisms (25, 28) are interconnected by a mechanical coupling (K), that each of said link mechanisms is apt to sense the actual relative pivoting angle of said cutting gripper part at one side, and that a signal member (34, 35) is associated to said mechanical coupling (K) which signal member is actuatable when an out-of-tolerance deviation between the pivoting angles at both sides is exceeded, and that said signal member is apt to generate an alarm signal and/or a switch off signal and/or a correction signal for said synchronisation control (C).

8. Silage cutting gripper as in claim 7, **characterised in that** each linkage mechanism comprises a first link (25) linked to said lower part (U) of said cutting gripper and extending from said upper part (O) across said pivot axis (G), that said link (25) is pivotably connected with a respective one of sensing links (28), that said sensing links (28) are connected to a coupling shaft (29) extending parallel to said pivot axis (G) and being rotatably supported at said upper part (O) of said cutting gripper, that one sensing link (28) is fixed in non-rotatable fashion to said coupling shaft (29), while the other sensing link of is seated in rotatable fashion on said coupling shaft (29), that a reference lever (32) is fixed in non-rotatable fashion to said coupling shaft (29) adjacent to one sensing link (28), and that a signal generating switching device (E) responsive to a relative angular displacement between said reference lever (32) and said sensing link (28), and constituting said signal member (34, 35) is provided at said sensing link (28) or at said reference lever (32), respectively.

9. Silage cutting gripper as in claim (8), **characterised in that** said reference lever (32) is a bendable or flexible switch actuating tongue.

10. Silage cutting gripper as in claim 8, **characterised in that** said switching device (E) comprises two alternatingly actuatable limit switches (34, 35) connected to said hydraulic synchronisation control (C) of said hydraulic cylinders (Z).

11. Silage cutting gripper as in claim 1, **characterised in that** said separation plane (11) of said upper part (O) of said cutting gripper adjacent to drivable or fixedly installed cutting edges (12) has an arcuate curvature with its curvature centre substantially situated at said pivot axis (G).

12. Silage cutting gripper as in claim 1, **characterised in that** stationary or moveable and driven cutting elements (15, 23) are provided at free edge regions of said side walls (14, 9) of said upper and lower parts (O, U) of said cutting gripper.

13. Silage cutting gripper as in claim 1, **characterised in that** said vehicle connection assemblies (2) are provided at rear cheeks (3) of said frame structure (R1), and that the horizontal distance between said cheeks (3) is larger than the width of said working vehicle (F) and/or larger than the width of a cabin of said working vehicle.

## Revendications

1. Pince coupante pour ensilage (H) destinée au montage sur l'arrière ou l'avant d'un véhicule de travail autotracté (F), avec une partie inférieure (U) de pince qui présente un cadre (R1) du côté arrière et une surface de chargement (5) assemblée avec le cadre par l'intermédiaire d'un premier pliage (8), partie inférieure sur laquelle est montée de façon pivotante, autour d'un axe de pivotement (G) à peu près horizontal, une partie supérieure de pince (O) qui présente un cadre (R2) du côté arrière et une surface de séparation (11) armée de tranchants, assemblée avec le cadre par l'intermédiaire d'un second pliage (8'), avec des dispositifs de raccordement (2) au véhicule sur le côté, opposé à la surface de chargement (5), du cadre (R1) de la partie inférieure (U) de la pince, et avec des vérins hydrauliques (Z) entre la partie supérieure et la partie inférieure de la pince (O, U), disposés sur le côté de l'axe de pivotement (G) tourné vers la surface de chargement (5) et la surface de séparation (11), **caractérisée en ce que** le premier et le second pliage (8, 8') définissent en position de fermeture de la pince coupante (H), dans la direction de pivotement autour de l'axe (G), la largeur intérieure maximale (L) de la pince coupante, que les vérins hydrauliques (Z) sont disposés sur les côtés extérieurs des parties de la pince coupante (O, U), que les points d'articulation (17, 19) des vérins hydrauliques (Z) sont disposés au moins largement dans les pliages (8, 8') et les vérins hydrauliques (Z) rentrés sont réalisés avec une longueur de construction correspondant au moins à peu près à la largeur intérieure maximale (L), et que le cadre (R1) présente des prolongements (10) dirigés vers le haut au-dessus des parois latérales (9) de la partie inférieure (U) de la pince coupante, dans lesquels est disposé l'axe de pivotement (G).

2. Pince coupante pour ensilage suivant la revendication 1, **caractérisée en ce que** l'écartement entre l'axe de pivotement (G) et le point d'articulation (19) du vérin hydraulique (Z) sur la partie inférieure (U) de la pince coupante est plus élevé que l'écartement entre l'axe de pivotement (G) et le point d'articulation (17) sur la partie supérieure (O) de la pince.

3. Pince coupante pour ensilage suivant la revendication 1, **caractérisée en ce que**, en position de fermeture de la pince coupante (H), la course des vérins limitée par l'écartement entre les points d'articulation (17, 19), la distance du tranchant (12) de la partie supérieure (O) de la pince par rapport à l'axe d'articulation (G), et les distances des points d'articulation (17, 19) par rapport à l'axe de pivotement (G), sont mutuellement adaptés de sorte que, en position d'ouverture totale de la pince de coupe pour ensilage (H), la zone de coupe (h), vue dans la direction verticale, mesure au moins 2,2 m, de préférence jusqu'à 3,0 m, préférentiellement voire jusqu'à 4,5 m.

4. Pince coupante pour ensilage suivant la revendication 1, **caractérisée en ce que** les points d'articulation (17, 19) sont disposés dans des structures de renforcement (18, 20), et que les structures de renforcement forment des logements en forme de poches pour les points d'articulation.

5. Pince coupante pour ensilage suivant la revendication 1, **caractérisée en ce que** le cadre (R1) de la partie inférieure (U) de la pince coupante est une paroi arrière fermée.

6. Pince coupante pour ensilage suivant la revendication 1, **caractérisée en ce qu'**il est prévu une commande de synchronisme hydraulique pour les vérins hydrauliques (Z), et qu'un dispositif de balayage (W) pour des torsions des parties de la pince coupante, par exemple électromécanique, supervisant de préférence la commande de synchronisme (C), est disposé sur les parties (U, O) de la pince coupante.

7. Pince coupante pour ensilage suivant la revendication 6, **caractérisée en ce que** le dispositif de balayage (W) présente des mécanismes à bras oscillants (25, 28), disposés sur les côtés des parties (U, O) de la pince coupante et assemblés par l'intermédiaire d'un couplage mécanique (K), que chaque mécanisme à bras oscillants balaye sur un côté l'angle de pivotement effectif relatif des parties de la pince coupante, et que le couplage mécanique (K) est associé à un émetteur de signaux (34, 35), qui est actionnable à partir d'un dépassement par le haut d'un écart admissible entre les angles de pivotement sur les deux côtés, et génère un signal d'alarme et/ou un signal de déconnexion et/ou un signal correctif pour la commande de synchronisme (C).

8. Pince coupante pour ensilage suivant la revendication 7, **caractérisée en ce que** chaque mécanisme à bras oscillants présente un premier bras (25) articulé sur la partie inférieure (U) de la pince coupante, dirigé à l'écart de la partie supérieure (O) de la pince par l'intermédiaire de l'axe de pivotement (G), et qui est assemblé en pivotement avec un bras de contact (28), que chaque bras de contact (28) est raccordé à un arbre de couplage (29) monté tournant parallèlement à l'axe d'articulation (G) sur la partie supérieure (O) de la pince coupante, que le bras de contact (28) de l'un des mécanismes à bras oscillants est monté de façon non tournante et le bras de contact de l'autre mécanisme à bras oscillants est monté tournant sur l'arbre de couplage (29), qu'un levier de référence (32) est monté non tournant sur l'arbre de couplage (29) à côté du bras de contact (28) de l'autre mécanisme à bras oscillants, et qu'il est prévu sur le bras de contact (28) ou sur le levier de référence (32), en tant qu'émetteur de signaux (34, 35), un dispositif de commutation (E) générateur de signaux, qui répond à un déport angulaire relatif entre le levier de référence (32) et le bras de contact (28).

9. Pince coupante pour ensilage suivant la revendication 8, **caractérisée en ce que** le levier de référence (32) est une lame flexible de commande d'interrupteur.

10. Pince coupante pour ensilage suivant la revendication 8, **caractérisée en ce que** le dispositif de commutation (E) comporte deux interrupteurs de fin de course (34, 35) actionnables en alternance et est raccordé à la commande de synchronisme hydraulique (C) des vérins hydrauliques (Z).

11. Pince coupante pour ensilage suivant la revendication 1, **caractérisée en ce que** la surface de séparation (11) de la partie supérieure (O) de la pince présente à la suite de tranchants (12) installés fixement ou entraînables une courbure avec un centre de courbure situé au moins à peu près dans l'axe d'articulation (G).

12. Pince coupante pour ensilage suivant la revendication 1, **caractérisée en ce que** des éléments de coupe (15, 23) fixés ou entraînables en mouvement sont prévus sur des zones de bordure libres des parois latérales (14, 9) des parties (O, U) de la pince coupante.

13. Pince coupante pour ensilage suivant la revendication 1, **caractérisée en ce que** les dispositifs de raccordement (2) au véhicule sont prévus sur des joues (3) du côté arrière du cadre (R1), et que l'écartement horizontal entre les joues (3) est plus élevé que la largeur du véhicule de travail (F) ou de sa cabine.
